# EUROPÄISCHE PATENTSCHRIFT

(11) **EP 2 922 715 B1**
(45) Veröffentlichungstag und Bekanntmachung des Hinweises auf die Patenterteilung: **28.03.2018**
(21) Anmeldenummer: 13785824.7
(22) Anmeldetag: 30.10.2013
(51) Int. Cl.: B60G 21/055, B60G 3/20, B60G 7/00

(54) **RADAUFHÄNGUNG FÜR EIN KRAFTFAHRZEUG MIT EINER STABILISATORANORDNUNG**
WHEEL SUSPENSION FOR A MOTOR VEHICLE WITH A STABILISER ARRANGEMENT
SUSPENSION DE ROUE D'UN VÉHICULE AUTOMOBILE AVEC ENSEMBLE STABILISATEUR

(30) Priorität: 23.11.2012 DE 102012022889
(43) Veröffentlichungstag der Anmeldung: 30.09.2015
(73) Patentinhaber: Audi AG, 85045 Ingolstadt (DE)
(72) Erfinder: MOHRLOCK, Dominik, 85114 Buxheim (DE); LANGHOFF, Hans-Jürgen, 85101 Lenting (DE)
(74) Vertreter: Reichert, Thomas Klaus
(86) Internationale Anmeldenummer: PCT/EP2013/003272
(87) Internationale Veröffentlichungsnummer: WO 2014/079533

(56) Entgegenhaltungen:
- EP-A1- 1 262 396
- EP-A1- 1 609 631
- DE-A1- 1 430 899
- DE-A1- 10 344 995
- DE-A1- 19 522 336
- DE-A1-102004 004 888
- GB-A- 2 442 716

## Beschreibung

Die vorliegende Erfindung betrifft eine Stabilisatoranordnung für eine Radaufhängung von Kraftfahrzeugen gemäß dem Oberbegriff des Patentanspruchs 1.

Beispielsweise durch die DE 10 2004 030 463 A1 ist eine hintere Radaufhängung mit mehreren, räumlich versetzt angeordneten unteren und oberen Lenkern und einem U-förmigen Querstabilisator bekannt, bei der das Mittelteil des Stabilisators vor den Raddrehachsen an einem gemeinsamen Hilfsrahmen gelagert ist und die nach hinten abragenden Schenkel des Stabilisators über etwa vertikal ausgerichtete Stangen gelenkig mit einem oberen Lenker der Radaufhängung gekoppelt sind.

Das Dokument DE 103 44 995 A1 offenbart eine Radaufhängung gemäß dem Oberbegriff des Anspruchs 1. Die DE 14 30 899 A1, EP 1 262 396 A1 und GB 2 442 716 A offenbaren Radaufhängungen für ein Kraftfahrzeug mit einer Stabilisatoranordnung.

Ausgehend von einer derartigen Stabilisatoranordnung ist es Aufgabe der vorliegenden Erfindung, eine in der kinematischen Auslegung und Anordnung verbesserte Stabilisatoranordnung vorzuschlagen.

Die Lösung dieser Aufgabe ist in den Merkmalen des Patentanspruchs 1 angeführt. Vorteilhafte und besonders zweckmäßige Weiterbildungen und Ausgestaltungen der Erfindung sind Gegenstand der Unteransprüche.

Gemäß dem kennzeichnenden Teil des Patentanspruches 1 ist eine Gelenkverbindung zwischen der Stange und dem Lenker, insbesondere im eingefederten Zustand des Fahrzeugs, in der Fahrzeugquerrichtung um einen Quer-Freigang außerhalb eines Fahrzeug-Längsträgers angeordnet. Die zwischen der in etwa vertikal verlaufenden Stange und dem Lenker ausgebildete Gelenkverbindung ist somit packagegünstig in der Fahrzeugquerrichtung außerhalb des Fahrzeug-Längsträgers sowie in etwa auf dessen Höhe angeordnet.

Der oben erwähnte Lenker der Radaufhängung ist Bestandteil eines insbesondere aufgelösten Mehrlenkerverbandes, und ein, in der Fahrtrichtung betrachtet, vorderer oberer Lenker, der bevorzugt sich unterhalb des Fahrzeug-Längsträgers erstreckt. Für eine packagegünstige Anordnung ist es von Vorteil, wenn der vordere obere Lenker in etwa V-förmig oder U-förmig nach unten gekrümmt ist. In diesem Fall weist der Lenker in etwa V-förmig an einer unteren Scheitelstelle zusammenlaufende Bogenabschnitte auf. Die untere Scheitelstelle der V-förmigen Krümmung kann im eingefederten Zustand des Fahrzeugs um einen Vertikal-Freigang unterhalb des Fahrzeug-Längsträgers angeordnet sein. Die oben erwähnte Gelenkverbindung zwischen der Stange und dem oberen, vorderen Lenker ist bevorzugt an dem, in der Querrichtung äußeren Lenker-Bogenabschnitt vorgesehen.

Der Mehrlenkerverband aufweist zudem einen vorderen unteren Lenker, der in der Fahrtrichtung betrachtet über einen Längs-Freiraum vor dem vorderen oberen Lenker beabstandet ist. Erfindungsgemäß erstreckt sich der Schenkel des Querstabilisators innerhalb des Längs-Freiraums bis zur unteren Gelenkverbindung mit der Stange. Die oberen und unteren Lenker des Mehrlenkerverbandes können bevorzugt an einem Hilfsrahmen einer hinteren Radaufhängung gelagert sein. Zudem kann der Querstabilisator über zumindest ein Stabilisatorlager am Hilfsrahmen drehgelagert sein. Bevorzugt kann die von dem Stabilisatorlager definierte Stabilisator-Drehachse unterhalb des Hilfsrahmens angeordnet sein. Auf diese Weise ergibt sich speziell beim Einsatz eines aktiven Stabilisatorsystems unterhalb des vorderen Querholms des Hilfsrahmens ausreichend Bauraum, in dem ein Drehaktuator des aktiven Stabilisatorsystems angeordnet werden kann. Erfindungsgemäß verläuft der durch die Gelenkverbindungen der Stange verlaufende Kraftvektor zumindest im Wesentlichen durch die über die Lenkerlager bestimmte Mittelachse des Lenkers. Diese Anordnung stellt sicher, dass die mit dem Stabilisator gekoppelte Stange keine Kippmomente oder Drehmomente auf den Lenker bzw. auf dessen Lenkerlager ausübt. Dies hat insbesondere den Vorteil, dass die Lenkerlager nicht verzwängt werden, dadurch weniger Geräusche auf den Aufbau des Kraftfahrzeugs übertragen und gegebenenfalls zur Erzielung eines verbesserten Fahrkomforts weicher ausgelegt sein können.

Bei einer Mehrlenkerachse kann besonders bevorzugt das Mittelteil des Stabilisator im Höhenbereich eines unteren Lenkers der Radaufhängung gelagert sein, wobei die Stange nach oben ausgerichtet an einem oberen Lenker angelenkt ist. Dies ermöglicht eine baulich vorteilhafte Integration des Stabilisators mit günstiger Anbindung der Stange an dem oberen Lenker der Radaufhängung.

Dabei kann es zur Erzielung eines erforderlichen Freigangs des oberen Lenkers in der Radaufhängung besonders zweckmäßig sein, wenn der Lenker in Fahrzeuglängsrichtung gesehen etwa U-förmig gebogen ist und die Stange an dem höheren und außen liegenden Abschnitt des Lenkers angelenkt ist. Dies trägt vorteilhaft zu einer Stabilisierung der Lenkerlage in der Radaufhängung bei und stellt günstige Übersetzungsverhältnisse nahe 0,8 zwischen dem Federweg des Rades und dem Stellweg der auf den Stabilisator wirkenden Stange her.

Bevorzugt kann in an sich bekannter Weise das Mittelteil des Stabilisators in Fahrtrichtung des Kraftfahrzeugs betrachtet vor der Raddrehachse der Räder positioniert sein. Ferner kann die an dem Schenkel und dem Lenker angelenkte Stange zwischen den Gelenkverbindungen bogenförmig ausgeführt sein, um einen Freigang insbesondere zum Lenker und ggf. zu einer Radantriebswelle bei angetriebenen Rädern der Radaufhängung bereit zu stellen.

Die Gelenkverbindungen der Stange sind besonders bevorzugt als Gummi-Metall-Hülsenlager ausgebildet, wobei die Schwenkachse der lenkerseitigen Gelenkverbindung in Fahrzeuglängsrichtung ausgerichtet ist. Durch die dadurch erzielte Axialführung des Hülsenlagers kann auch bei seitlich neben dem Lenker positionierter Anordnung der Gelenkverbindung ein Verdrehen oder Verkippen des Lenkers wirksam verhindert werden. Dabei kann zweckmäßig die Schwenkachse der Gelenkverbindung bzw. des Hülsenlagers der Stange am Stabilisatorschenkel in Fahrzeugquerrichtung verlaufen.

In einer sowohl aus Freiganggründen als auch einer in der Kinematik bevorzugten Anordnung können die Schenkel des Stabilisators in etwa parallel zu dem schräg nach hinten außen verlaufenden, unteren Lenker der Radaufhängung ausgerichtet sein und in der Draufsicht gesehen innerhalb des Lenkers verlaufen, wobei deren Gelenkverbindungen mit der Stange in Konstruktionslage der Radaufhängung etwa vertikal unterhalb der Gelenkverbindung mit dem oberen Lenker liegen.

Schließlich können die oberen und unteren Lenker der Radaufhängung und das Mittelteil des Stabilisators an einem Hilfsrahmen der hinteren Radaufhängung des Kraftfahrzeugs angelenkt bzw. gelagert sein und demzufolge eine komplette Montageinheit zum Einbau in ein Kraftfahrzeug bilden.

Ein Ausführungsbeispiel der Erfindung ist im Folgenden anhand der beigefügten Zeichnung näher erläutert. Es zeigen:
- Fig. 1: in raumbildlicher Darstellung eine Hinterachse für ein Kraftfahrzeug mit je Radaufhängung mehreren unteren und oberen Lenkern und einer Stabilisatoranordnung mit einem drehbar an einem Hilfsrahmen gelagerten Mittelteil und nach hinten abragenden Schenkeln, die über Stangen gelenkig mit oberen Lenkern verbunden sind;
- Fig. 2: eine Ansicht von vorne oben auf die linksseitige Radaufhängung mit Darstellung des korrespondierenden Stabilisatorschenkels, die nach oben abragende Stange und deren Verbindung mit dem oberen Lenker;
- Fig. 3: in skizzenhafter Darstellung eine Ansicht entgegen der Fahrtrichtung des Kraftfahrzeugs auf den oberen Lenker und die daran angelenkte Stange des Stabilisators der Radaufhängung nach Fig. 2;
- Fig. 4: einen Querschnitt gemäß Linie IV - IV der Fig. 3 durch den Lenker im Bereich der Gelenkverbindung mit der Stange; und
- Fig. 5: in einer Teilansicht von oben den Mehrlenkerverband der Radaufhängung.

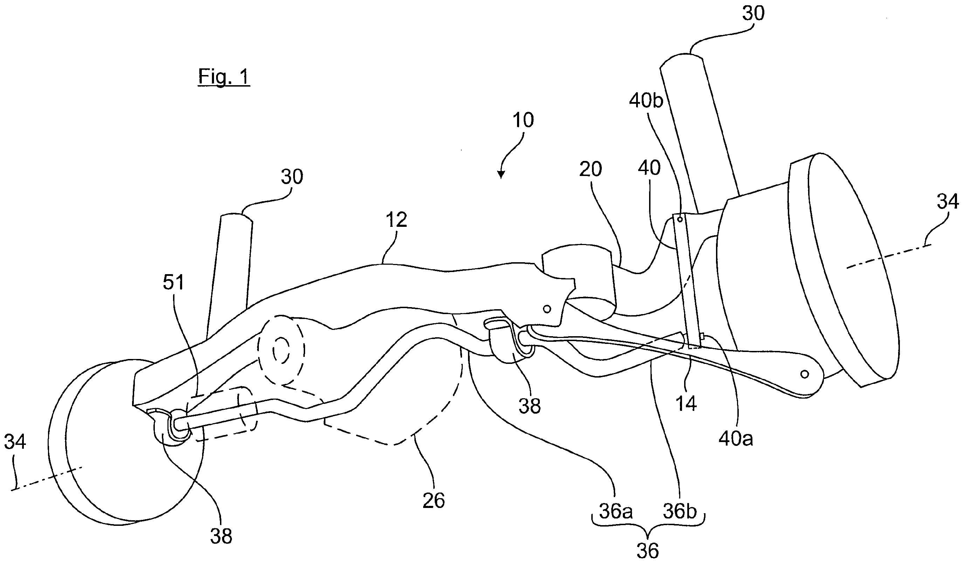

In der Fig. 1 ist eine Hinterachse 10 für Kraftfahrzeuge dargestellt, die nur soweit beschrieben ist, als dies für das Verständnis der vorliegenden Erfindung erforderlich ist.

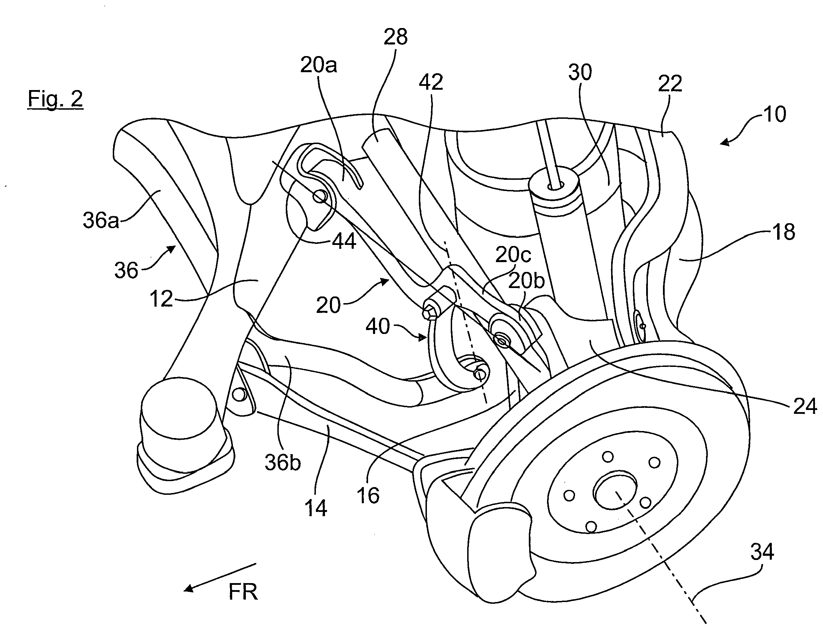

Die Hinterachse 10 weist einen aus Längsholmen und Querholmen zusammengesetzten, in der Draufsicht etwa rechteckförmigen Hilfsrahmen 12 auf, an dem für die beidseitigen Radaufhängungen untere Lenker 14, 16, 18 (vergleiche auch Fig. 2) und obere Lenker 20, 22 in räumlich versetzter Anordnung über Lenkerlager (ohne Bezugszeichen) angelenkt sind.

Die Lenker 14 bis 22 sind andererseits über Lenkerlager an beidseitigen Radträgern 24 angebunden. Die Radträger 24 mit entsprechenden Radlagern tragen die Hinterräder (nicht dargestellt) des Kraftfahrzeugs.

Ferner ist an dem Hilfsrahmen 12 ein nur gestrichelt angedeutetes Hinterachs-Differenzialgetriebe 26 aufgehängt, das über quer verlaufende Antriebswellen die Hinterräder antreibt. In Fig. 1 sind des Weiteren Teleskopstoßdämpfer 30 ersichtlich, die in bekannter Weise zur Abfederung und Dämpfung der Karosserie des Kraftfahrzeugs dienen.

In Fahrtrichtung F des Kraftfahrzeugs vor den Raddrehachsen 34 und in Höhe der unteren Lenker 14 ist ein U-förmiger Querstabilisator 36 angeordnet, dessen in Fahrzeugquerrichtung verlaufendes Mittelteil 36a über Stabilisatorlager 38 am Hilfsrahmen 12 verdrehbar gelagert ist.

Die entgegen der Fahrtrichtung F nach hinten und schräg nach außen abragenden Schenkel 36b des Stabilisators 36 sind an ihren freien Enden über jeweils eine nach oben abragende Stange 40 gelenkig mit dem oberen, vorne liegenden Lenker 20 der Radaufhängungen verbunden.

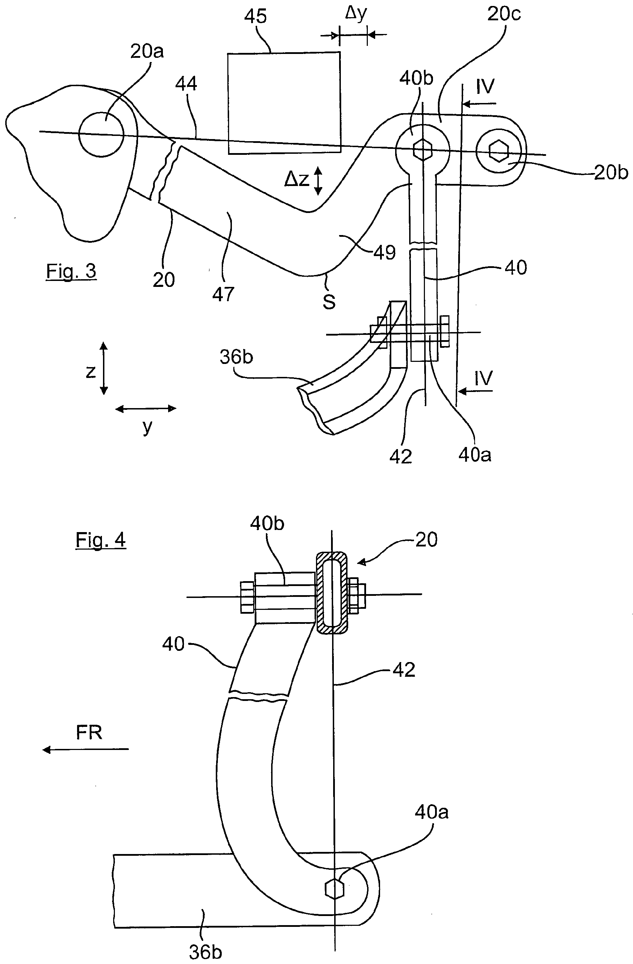

Die Gelenkverbindungen 40a, 40b der Stangen 40 (Fig. 3 und 4) mit den Schenkeln 36b des Stabilisators 36 und mit den Lenkern 20 sind durch an sich bekannte Gummi-Metall-Hülsenlager (silent blocs) hergestellt, wobei die eingezeichneten Lagermittelachsen bei der unteren Gelenkverbindung 40a quer zur Fahrtrichtung F und bei der oberen Gelenkverbindung 40b in Fahrtrichtung F ausgerichtet sind.

In der Fig. 3 ist die Radaufhängung in einem eingefederten Zustand des Kraftfahrzeuges gezeigt. Demzufolge ist die Gelenkverbindung 40b zwischen der Stange 40 und dem vorderen oberen Lenker 20 in der Fahrzeugquerrichtung y um einen Quer-Freigang Δy außerhalb des Fahrzeug-Längsträgers 45 angeordnet. Der sich unterhalb des Fahrzeug-Längsträgers 45 erstreckende Lenker 20 ist zudem in etwa V-förmig nach unten gekrümmt, um einen Vertikal-Freigang Δz bereitzustellen. Die V-förmige Krümmung weist gemäß der Fig. 3 zwei an einer unteren Scheitelstelle S zusammenlaufende Bogenabschnitte 47, 49 auf, wobei in der Fig. 3 die untere Scheitelstelle S des Lenkers 20 um den vorerwähnten Vertikal-Freigang Δz von der Unterseite des Fahrzeug-Längsträgers 45 beabstandet ist.

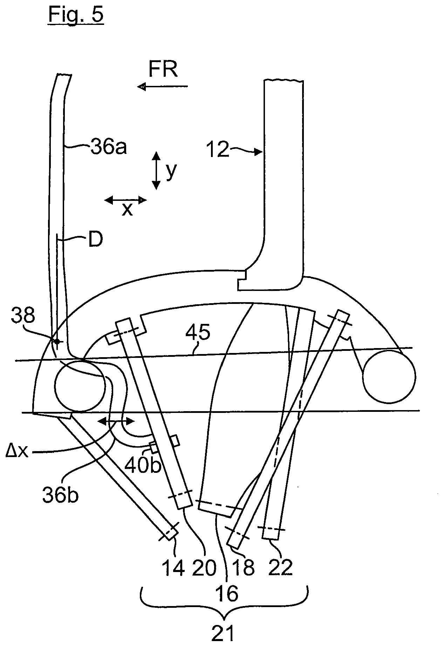

Wie weiter aus der Fig. 5 hervorgeht, ist der vordere untere Lenker 14 des Mehrlenkerverbandes 21 in der Fahrtrichtung FR betrachtet, über einen Längs-Freiraum Δx vor dem vorderen oberen Lenker 20 angeordnet. Packagebedingt günstig erstreckt sich der Schenkel 36b des Querstabilisators 36 innerhalb des Längs-Freiraums Δx bis zur Gelenkverbindung 40a mit der Stange.

Die vom Stabilisatorlager 38 definierte Stabilisator-Drehachse D (Fig. 5) ist unterhalb des Hilfsrahmens 12 angeordnet.

Wie oben bereits erwähnt, ist der obere Lenker 20 aus Freiganggründen etwa U-förmig nach unten gekrümmt ausgeführt, wobei an dessen oberen, außen liegendem Abschnitt 20c die Stange 40 über die Gelenkverbindung 40b in gleicher Höhe mit einer Verbindungsgeraden bzw. einer dadurch gebildeten Mittelachse 44 zwischen den Lenkerlagern 20a, 20b angelenkt ist.

Die Gelenkverbindungen 40a, 40b der Stange 40 mit den Stabilisatorschenkeln 36b des Stabilisators 36 und den Lenkern 20 sind ferner so ausgeführt, dass der eingezeichnete Kraftvektor 42 (Fig. 4) der Stange 40 ohne Längsversatz durch die Mittelachse 44 der Lenker 20 verläuft und deshalb bei entsprechenden Federkräften kein Drehmoment auf die Lenker 20 ausübt.

Die Stangen 40 sind zudem zwischen den Gelenkverbindungen 40a, 40b nach vorne zu gekrümmt bzw. bogenförmig ausgebildet, um einen erforderlichen Freigang zu den benachbarten Antriebswellen 28 sicherzustellen.

Schließlich sind die Schenkel 36b des Stabilisators 36 (Fig. 2) in etwa parallel zu dem schräg nach hinten außen verlaufenden, unteren Lenker 14 der Radaufhängungen ausgerichtet und verlaufen in der Draufsicht gesehen innerhalb der Lenker 14, wobei deren Gelenkverbindung 40a mit der Stange 40 etwa vertikal unterhalb der Gelenkverbindung 40b mit dem oberen Lenker 20 (Fig. 4) liegt.

Die Erfindung ist nicht auf das dargestellte Ausführungsbeispiel beschränkt. Anstelle des einteiligen Stabilisators 36 könnte auch eine zweiteilige Version mit zwei Mittelteilen und mit integrierten Aktuatoren zur Niveauverstellung und/oder zur Wank- und Nickstabilisierung der Karosserie des Kraftfahrzeugs vorgesehen sein.

Die Lenkerlager der Lenker 14 bis 22 können in bekannter Weise durch Gummi-Metall-Hülsenlager (aufbauseitig) und/oder durch Kugelgelenke (radträgerseitig) gebildet sein. Gleiches gilt für die Gelenkverbindungen 40a, 40b der Stangen 40, wobei jedoch deren Kraftvektor 42 wie vorbeschrieben durch die Lenkermittelachse 44 gerichtet sein muss. Beispielsweise könnten die Stangen 40 den Lenker 20 auch gabelförmig umfassen.

Gegebenenfalls könnten die Radaufhängungen auch ohne Hilfsrahmen 12 unmittelbar am Aufbau des Kraftfahrzeugs angeordnet sein.

## Patentansprüche

1. Radaufhängung für ein Kraftfahrzeug mit einer Stabilisatoranordnung, mit einem in der Fahrzeugquerrichtung (y) ausgerichteten, drehbar gelagerten Mittelteil (36a) und zumindest einem davon in der Fahrzeuglängsrichtung (x) abragenden Schenkel (36b), der über eine etwa vertikal verlaufende Stange (40) mit einem Lenker (20) der Radaufhängung gelenkig verbunden ist, wobei der Lenker (20) ein, in der Fahrtrichtung (FR) betrachtet, vorderer oberer Lenker ist, der Bestandteil eines Mehrlenkerverbandes (21) ist, der einen vorderen unteren Lenker (14) aufweist, und dessen obere und untere Lenker (14, 16, 18, 20, 22) an einem Hilfsrahmen (10) der hinteren Radaufhängung gelagert sind, und wobei die Stange (40) an dem vorderen oberen Lenker (20) derart angelenkt ist, dass deren durch die Gelenkverbindungen (40a, 40b) der Stange (40) verlaufender Kraftvektor (Wirklinie 42) zumindest im Wesentlichen durch die durch die Lenkerlager (20a, 20b) bestimmte Mittelachse (44) des vorderen oberen Lenkers (20) verläuft, **dadurch gekennzeichnet, dass** der vordere untere Lenker (14), in- der Fahrtrichtung (FR) betrachtet, über einen Freiraum (Δx) vor dem vorderen oberen Lenker (20) liegt, wobei sich der Schenkel (36b) innerhalb des Freiraums (Δx) bis zur Gelenkverbindung (40a) mit der Stange (40) erstreckt, und dass die Gelenkverbindung (40b) zwischen der Stange (40) und dem vorderen oberen Lenker (20) in der Fahrzeugquerrichtung (y) um einen Quer-Freigang (Δy) außerhalb eines Fahrzeug-Längsträgers (45) angeordnet ist.

2. Radaufhängung nach Anspruch 1, **dadurch gekennzeichnet, dass** der Mehrlenkerverband (21) sich unterhalb des Fahrzeug-Längsträgers erstreckt.

3. Radaufhängung nach Anspruch 2, **dadurch gekennzeichnet, dass** der vordere obere Lenker (20) zur Bereitstellung eines Vertikal-Freigangs (Δz) nach unten gekrümmt ist, und zwar mit an einer unteren Scheitelstelle (S) zusammenlaufenden Bogenabschnitten (47, 49) des Lenkers (20), welche Scheitelstelle (S), insbesondere im vollständig eingefederten Zustand des Fahrzeugs, um den Vertikal-Freigang (Δz) vom Fahrzeug-Längsträger (45) beabstandet ist, und dass insbesondere die Gelenkverbindung (40b) am, in der Querrichtung (y) äußeren Bogenabschnitt (49) vorgesehen ist.

4. Radaufhängung nach einem der vorhergehenden Ansprüche, **dadurch gekennzeichnet, dass** der Querstabilisator (36) über zumindest ein Stabilisatorlager (38) am Hilfsrahmen (10) drehgelagert ist.

5. Radaufhängung nach Anspruch 4, **dadurch gekennzeichnet, dass** das, eine Stabilisator-Drehachse (D) definierende Stabilisatorlager (38) unterhalb des Hilfsrahmens (10) angeordnet ist, und dass bei Einsatz eines aktiven Stabilisatorsystems ein erforderlicher Drehaktuator (51) im Bereich unterhalb eines vorderen Querholms des Hilfsrahmens (10) vorsehbar ist.

6. Radaufhängung nach einem der vorhergehenden Ansprüche, **dadurch gekennzeichnet, dass** das Mittelteil (36a) des Stabilisators (36) in Fahrtrichtung des Kraftfahrzeugs betrachtet vor der Raddrehachse (34) der Räder positioniert ist.

7. Radaufhängung nach einem der vorhergehenden Ansprüche, **dadurch gekennzeichnet, dass** die an dem Schenkel (36b) und dem vorderen oberen Lenker (20) angelenkte Stange (40) zwischen den Gelenkverbindungen (40a, 40b) bogenförmig zum Freigang zum vorderen oberen Lenker und ggf. zu einer Radantriebswelle (28) gestaltet ist.

8. Radaufhängung nach einem der vorhergehenden Ansprüche, **dadurch gekennzeichnet, dass** die Gelenkverbindungen (40a, 40b) der Stange (40) als Gummi-Metall-Hülsenlager ausgebildet sind, wobei die Schwenkachse des lenkerseitigen Gelenklagers (40b) in Fahrzeuglängsrichtung ausgerichtet ist.

9. Radaufhängung nach einem der vorhergehenden Ansprüche, **dadurch gekennzeichnet, dass** die Schwenkachse (40a) der Gelenkverbindung (40a) der Stange (40) am Stabilisatorschenkel (36b) in Fahrzeugquerrichtung verläuft.

10. Radaufhängung nach einem der vorhergehenden Ansprüche, **dadurch gekennzeichnet, dass** die Schenkel (36b) des Stabilisators (36) in etwa parallel zu dem schräg nach hinten außen verlaufenden, unteren Lenker (14) der Radaufhängung ausgerichtet sind und in der Draufsicht gesehen innerhalb des Lenkers (14) verlaufen, wobei deren Gelenkverbindung (40a) mit der Stange (40) etwa vertikal unterhalb der Gelenkverbindung (40b) mit dem vorderen oberen Lenker (20) liegt.

## Claims

1. Wheel suspension for a motor vehicle with a stabiliser arrangement, with a rotatably mounted centre part (36a) aligned in the vehicle transverse direction (y) and at least one leg (36b) protruding therefrom in the vehicle longitudinal direction (x), which is articulatedly connected via a roughly vertically running rod (40) to a link (20) of the wheel suspension, wherein the link (20) is a front upper link, viewed in the direction of travel (FR), which is part of a multi-link unit (21) which has a front lower link (14) and whose upper and lower links (14, 16, 18, 20, 22) are mounted on a subframe (10) of the rear wheel suspension and wherein the rod (40) is articulated on the front upper link (20) such that its force vector (pitch line 42) running through the joint connections (40a, 40b) of the rod (40) runs at least substantially through the centre axis (44) of the front upper link (20) determined by the link bearings (20a, 20b), **characterised in that** the front lower link (14), viewed in the direction of travel (FR), is located above a clearance (Δx) in front of the front upper link (20), wherein the leg (36b) extends inside the clearance (Δx) to the joint connection (40a) with the rod (40) and **in that** the joint connection (40b) is arranged between the rod (40) and the front upper link (20) in the vehicle transverse direction (y) around a transverse free travel (Δy) outside of a vehicle longitudinal beam (45).

2. Wheel suspension according to claim 1, **characterised in that** the multi-link unit (21) extends below the vehicle longitudinal beam.

3. Wheel suspension according to claim 2, **characterised in that** the front upper link (20) is curved downwards to provide a vertical free travel (Δz) and with bent sections (47, 49) of the link (20) converging at a lower peak point (S), which peak point (S), in particular in the completely compressed state of the vehicle, is spaced from the vehicle longitudinal beam (45) by the vertical free travel (Δz) and **in that** the joint connection (40b) is in particular provided at the outer bent section (49) in the transverse direction (y).

4. Wheel suspension according to any one of the preceding claims, **characterised in that** the transverse stabiliser (36) is rotatably mounted on the subframe (10) via at least one stabiliser bearing (38).

5. Wheel suspension according to claim 4, **characterised in that** the stabiliser bearing (38) defining an axis of rotation (D) of the stabiliser is arranged below the subframe (10) and **in that** a required rotary actuator (51) can be provided in the region below a front cross beam of the subframe (10) when using an active stabiliser system.

6. Wheel suspension according to any one of the preceding claims, **characterised in that** the centre part (36a) of the stabiliser (36) is positioned in front of the axis of rotation of the wheel (34) of the wheels, viewed in the direction of travel of the motor vehicle.

7. Wheel suspension according to any one of the preceding claims, **characterised in that** the rod (40) articulated on the leg (36b) and the front upper link (20) is designed between the joint connections (40a, 40b) in a manner bent towards the free travel to the front upper link and optionally to a wheel drive shaft (28).

8. Wheel suspension according to any one of the preceding claims, **characterised in that** the joint connections (40a, 40b) of the rod (40) are designed as rubber metal sleeve bearings, wherein the pivot axis of the link-side joint bearing (40b) is aligned in the vehicle longitudinal direction.

9. Wheel suspension according to any one of the preceding claims, **characterised in that** the pivot axis (40a) of the joint connection (40a) of the rod (40) on the stabiliser leg (36b) runs in the vehicle transverse direction.

10. Wheel suspension according to any one of the preceding claims, **characterised in that** the legs (36b) of the stabiliser (36) are aligned roughly parallel to the lower link (14) of the wheel suspension running inclined downwards and outwards and run inside the link (14) viewed in plan view, wherein its joint connection (40a) to the rod (40) is roughly vertically below the joint connection (40b) to the front upper link (20).

## Revendications

1. Suspension de roue pour un véhicule automobile avec un agencement de stabilisateur, avec une partie médiane (36a) logée de manière rotative, orientée dans le sens transversal de véhicule (y) et au moins une branche (36b) dépassant de celle-ci dans le sens longitudinal de véhicule (x) qui est raccordée par articulation par le biais d'une tige (40) s'étendant à peu près verticalement à une bielle (20) de la suspension de roue, dans laquelle la bielle (20) est une bielle supérieure avant considérée dans le sens de la marche (FR) qui fait partie d'un groupe de multiples bielles (21) qui présente une bielle inférieure avant (14), et dont les bielles supérieure et inférieure (14, 16, 18, 20, 22) sont logées sur un faux-châssis (10) de la suspension de roue arrière, et dans laquelle la tige (40) est articulée à la bielle supérieure avant (20) de telle manière que son vecteur de force (ligne active 42) s'étendant par les liaisons articulées (40a, 40b) de la tige (40) s'étende au moins sensiblement par l'axe médian (44) déterminé par les paliers de bielle (20a, 20b) de la bielle supérieure avant (20), **caractérisée en ce que** la bielle inférieure avant (14), considérée dans le sens de la marche (FR), se trouve au-dessus d'un espace libre (Δx) avant la bielle supérieure avant (20), dans laquelle la branche (36b) s'étend dans l'espace libre (Δx) jusqu'à la liaison articulée (40a) avec la tige (40), et **en ce que** la liaison articulée (40b) est agencée entre la tige (40) et la bielle supérieure avant (20) dans le sens transversal de véhicule (y) d'une course libre transversale (Δy) en dehors d'une poutre longitudinale de véhicule (45).

2. Suspension de roue selon la revendication 1, **caractérisée en ce que** le groupe de multiples bielles (21) s'étend en dessous de la poutre longitudinale de véhicule.

3. Suspension de roue selon la revendication 2, **caractérisée en ce que** la bielle supérieure avant (20) est courbée vers le bas pour la mise à disposition d'une course libre verticale (Δz), et ce avec des sections arquées (47, 49) coïncidant sur un point de sommet (S) inférieur de la bielle (20), lequel point de sommet (S) est espacé en particulier à l'état complètement amorti du véhicule, de la course libre verticale (Δz) de la poutre longitudinale de véhicule (45), et **en ce qu'**en particulier la liaison articulée (40b) est prévue sur la section arquée (49) extérieure dans le sens transversal (y).

4. Suspension de roue selon l'une quelconque des revendications précédentes, **caractérisée en ce que** le stabilisateur transversal (36) est logé de manière rotative par le biais d'au moins un palier de stabilisateur (38) sur le faux-châssis (10).

5. Suspension de roue selon la revendication 4, **caractérisée en ce que** le palier de stabilisateur (38) définissant un axe de rotation de stabilisateur (D) est agencé en dessous du faux-châssis (10), et **en ce que**
lors de l'insertion d'un système de stabilisateur actif un actionneur rotatif (51) nécessaire peut être prévu dans la zone en dessous d'une poutre transversale avant du faux-châssis (10).

6. Suspension de roue selon l'une quelconque des revendications précédentes, **caractérisée en ce que** la partie médiane (36a) du stabilisateur (36) est positionnée considérée dans le sens de la marche du véhicule automobile avant l'axe de rotation de roue (34) des roues.

7. Suspension de roue selon l'une quelconque des revendications précédentes, **caractérisée en ce que** la tige (40) articulée à la branche (36b) et à la bielle supérieure avant (20) est conçue entre les liaisons articulées (40a, 40b) en arc vers la course libre vers la bielle supérieure avant et éventuellement vers un arbre d'entraînement de roue (28).

8. Suspension de roue selon l'une quelconque des revendications précédentes, **caractérisée en ce que** les liaisons articulées (40a, 40b) de la tige (40) sont réalisées comme palier de douille en métal et caoutchouc, dans laquelle l'axe de pivotement du palier articulé (40b) côté bielle est orienté dans le sens longitudinal de véhicule.

9. Suspension de roue selon l'une quelconque des revendications précédentes, **caractérisée en ce que** l'axe de pivotement (40a) de la liaison articulée (40a) de la tige (40) s'étend sur la branche de stabilisateur (36b) dans le sens transversal de véhicule.

10. Suspension de roue selon l'une quelconque des revendications précédentes, **caractérisée en ce que** les branches (36b) du stabilisateur (36) sont orientées à peu près parallèlement à la bielle (14) inférieure s'étendant en biais vers l'arrière à l'extérieur de la suspension de roue et vues en élévation s'étendent dans la bielle (14), dans laquelle sa liaison articulée (40a) avec la tige (40) se trouve à peu près verticalement en dessous de la liaison articulée (40b) avec la bielle supérieure avant (20).
